# EUROPEAN PATENT APPLICATION

(11) **EP 2 596 849 A1**
(43) Date of publication of application: **29.05.2013**
(21) Application number: 11190454.6
(22) Date of filing: 24.11.2011
(51) Int. Cl.: B01D 53/14, C10L 3/10

(54) **Method of removing a gaseous contaminant, preferably H2S, from a contaminated gas stream**

(71) Applicant: Shell Internationale Research Maatschappij B.V., 2596 HR The Hague (NL)
(72) Inventor: Golombok, Michael Zvi, 2288 GS Rijswijk (NL); Schoonbeek, Ronald Jan, 1031 HW Amsterdam (NL)
(74) Representative: Matthezing, Robert Maarten

(57) **Abstract**

The invention provides a method of removing a gaseous contaminant, preferably hydrogen sulphide (H₂S), from a contaminated gas stream, the method comprising at least the steps of:
(a) providing a contaminated gas stream (10) containing a gaseous contaminant;
(b) mixing the contaminated gas stream with an aqueous liquid (40) in a vessel (2) thereby forming hydrates of the contaminant;
(c) removing a contaminant-depleted gas stream (20) from the vessel;
(d) removing a stream (30) containing hydrates as formed in step (b) from the vessel;
wherein the aqueous liquid before the mixing of the contaminated gas stream in step (b) contains at least 0.1 wt.% solvated gaseous contaminant.

## Description

The present invention relates to a method of removing a gaseous contaminant, preferably hydrogen sulphide (H₂S), from a contaminated gas stream. In particular, the present invention relates to a method of removing a gaseous contaminant wherein hydrates of the contaminant, in particular H₂S, are formed.

Natural gas may contain various undesired contaminants, the most prominent ones being hydrogen sulphide (H₂S) and carbon dioxide (CO₂), other contaminants being for example carbonyl sulphide (COS), mercaptans, alkyl sulphides and aromatic sulphur-containing compounds. Transport and/or treatment of natural gas that contains these contaminants may add to the costs of the transport and/or treatment. The contaminants may also prove corrosive, hydrogen sulphide is toxic and on combustion produces sulphur dioxide, another pollutant. Moreover, carbon dioxide reduces the heating value of natural gas. It is therefore desirable to remove these contaminants from the natural gas at an early stage. Several methods to remove the above contaminants have been described in the prior art.

An example of a method of removing a contaminant such as H₂S and CO₂ from natural gas using hydrate formation has been described in WO 2010/018609. A problem of the method as described in WO 2010/018609 is that it is rather complicated; also, a significant amount of methane-hydrates are formed, which need to be selectively decomposed. A further problem of WO 2010/018609 is that methane- and H₂S-hydrates are formed simultaneously; i.e. mixed hydrates are formed which need to be dissociated subsequently in a controlled manner.

It is an object of the present invention to avoid one or more of the above problems. It is a further object of the present invention to provide an alternative method of removing a gaseous contaminant, preferably H₂S, from a contaminated gas stream such as natural gas.

One of the above or other objects may be achieved by the present invention by providing a method of removing a gaseous contaminant, preferably hydrogen sulphide (H₂S), from a contaminated gas stream, the method comprising at least the steps of:
(a) providing a contaminated gas stream containing a gaseous contaminant;
(b) mixing the contaminated gas stream with an aqueous liquid in a vessel thereby forming hydrates of the contaminant;
(c) removing a contaminant-depleted gas stream from the vessel;
(d) removing a stream containing hydrates as formed in step (b) from the vessel;
wherein the aqueous liquid before the mixing of the contaminated gas stream in step (b) contains at least 0.1 wt.% solvated gaseous contaminant.

It has now been surprisingly found that, using the method according to the present invention, gaseous contaminants such as in particular H₂S can be efficiently removed from a contaminated gas stream being contaminated with said contaminants.

A further advantage of the method according to the present invention is that it can be performed at relatively high temperatures. Also, the method according to the present invention can be perfomed relatively quickly; this, as the (in particular H₂S) hydrate formation occurs within a couple of minutes. Further, the method according to the present invention can be performed using simple equipment.

The contaminated gas stream as provided in step (a) may be any stream, but is preferably rich in aliphatic hydrocarbons (such as methane, ethane, propane, butane and pentane). More particularly, the contaminated gas stream is a methane-rich stream such as natural gas, an associated gas stream or a coal bed methane stream. Typically, the contaminated gas stream contains from 10 to 95 vol.% methane, preferably at least 50 vol.% methane. Usually, the contaminated gas stream may contain from 0.1 to 20 vol.%, preferably from 0.1 to 10 vol.%, of C₂-C₆ or higher aliphatic hydrocarbon compounds. Also, the contaminated gas stream may comprise up to 20 vol.%, suitably from 0.1 to 10 vol.% of nitrogen. The contaminated gas stream may comprise other (non-aliphatic-hydrocarbon) contaminants such as hydrogen sulphide (H₂S), carbon dioxide (CO₂), carbonyl sulphide (COS), mercaptans, alkyl sulphides and aromatic sulphur-containing compounds (such as thiophenes).

Although the above or other contaminants may be removed from a contaminated gas stream using the method according to the present invention, it is particularly preferred that the main contaminant to be removed is H₂S. To this end, the amount of H₂S in the contaminated gas stream as provided in step (a) is suitably from 1 ppmv to 80 vol.%. Preferably the contaminated gas stream provided in step (a) contains at least 5 vol.%, preferably at least 10 vol.%, more preferably at least 15 vol.% H₂S, based on the contaminated gas stream.

In step (b), the contaminated gas stream is fed into a vessel and mixed with an aqueous liquid contained in said vessel, thereby forming hydrates of the contaminant.

The vessel as used in the present invention is not limited in any way and may be selected from a wide range of vessels.

The aqueous liquid may be any aqueous liquid that allows the formation of hydrates. Typically, the aqueous liquid contains at least 85 vol.% and less than 99 vol.% water. The aqueous liquid may have various salt contents. Also, if desired, the aqueous liquid may contain hydrate formation promoting agents such as quaternary ammonium salts or the like; these agents may be added separately.

As mentioned above, the aqueous liquid contains before the mixing of the contaminated gas stream in step (b) at least 0.1 wt.% solvated gaseous contaminant. Hence, the aqueous liquid is pre-saturated and already contains gaseous contaminant solvated in the aqueous liquid to assist the hydrate formation. The person skilled in the art will readily understand how to calculate the saturation level of the solvated gaseous contaminant in the aqueous liquid. As an example, if the contaminant is H₂S, an ion-selective electrode may be used to detect sulphide ion in water as described in ASTM D4658-92, followed by back-calculation from the known dissociation equilibrium constants of H₂S.

According to a preferred embodiment according to the present invention, the aqueous liquid contains, before mixing in step (b), at least 0.2 wt.%, preferably at least 0.3 wt.%, more preferably at least 0.5 wt.%, even more preferably at least 1.0 wt.% solvated gaseous contaminant. Typically the aqueous liquid contains less than 15.0 wt.%, preferably less than 9.0 wt.% solvated gaseous contaminant, most preferably the aqueous liquid contains from 3.0 to 5.0 wt.%, such as 4.0 wt.%, solvated gaseous contaminant.

The person skilled in the art will readily understand that the mixing of the contaminated gas stream with the aqueous liquid may be performed in various ways. Preferably, the mixing take place such that rapid gas/liquid contacting is obtained. As one example, a suction stirrer for rapid gas/liquid mixing may be used. As another example, dispersion of the aqueous solution as fine droplets into the contaminated gas may be performed.

Preferably, in step (b) the contaminated gas is mixed with the aqueous liquid, by introducing the contaminated gas stream as gas bubbles in the aqueous solution. Preferably, the gas bubbles have a bubble size of less than 5 mm, preferably less than 4 mm, more preferably less than 3 mm and typically above 0.1 mm. Preferably, during the introducing the gas bubbles in step (b) the gas bubble surface to volume ratio is at least 1000, preferably at least 5000. Again, these gas bubbles can be obtained in various ways, such as by using stirring, mixing, and the like. Preferably, the mixing is performed using high speed mixing using e.g. a vacuum gas stirrer.

Although the conditions during the mixing in step (b) can be varied in many ways, it is preferred that during the mixing in step (b) the pressure in the vessel is from 5 to 50 bara, preferably from 10 to 40 bara, more preferably from 25 to 40 bara. Also, it is preferred that during the mixing in step (b) the temperature in the vessel is from 1 to 30°C, preferably from 5 to 20°C, more preferably from 10 to 16°C.

In step (c), a contaminant-depleted gas stream is removed from the vessel. Typically this contaminant-depleted gas stream is a methane-rich stream which may be subjected to further process steps, if desired, e.g. to remove other contaminants. In case the contaminated gas stream as provided in step (a) is natural gas or the like, the contaminant-depleted gas stream as removed in step (c) may e.g. be liquefied to obtain LNG.

In step (d), a stream containing hydrates as formed in step (b) is removed from the vessel. Typically, the stream containing hydrates as removed in step (d) is in the form of a slurry containing from 10 to 60 wt.% solids, preferably from 20 to 50 wt.% solids. In case the contaminant is H₂S, the slurry typically comprises H₂S hydrates in a solid dispersion suspended in an aqueous medium. The stream removed in step (d) may be subjected to further process steps, if desired. As an example, the slurry may be subjected to a solid/liquid separation (using conventional techniques such as a centrifugal system with solid retaining filter walls, a filtration step, etc.). If desired, the slurry may be subjected to an intermediate particle size reduction step (using e.g. milled crushing).

In case the contaminated gas stream as provided in step (a) contains gaseous CH₄, the ratio of the partial pressure of the gaseous CH₄ before and after the hydrates formation in step (b) (i.e. partial pressure of the gaseous CH₄ before the hydrates formation divided by the partial pressure of the gaseous CH₄ after the hydrates formation) is preferably kept below 0.10, preferably below 0.05 in order to avoid the formation of CH₄ hydrates. To this end, the contact time between the contaminated gas stream and the aqueous liquid in the vessel is preferably kept short, typically below 10 minutes, preferably below 5 minutes.

According to a particularly preferred embodiment of the present invention, the hydrates in the stream containing hydrates as removed in step (d) are decomposed (e.g. in a further vessel) thereby obtaining a stream containing an aqueous solution of the gaseous contaminant; preferably, the aqueous solution (as possibly obtained in the further vessel) is a saturated solution of the gaseous contaminant. It is even more preferred that the stream containing the aqueous solution of the gaseous contaminant is used as the aqueous liquid in step (b). To this end, the aqueous solution is recycled to step (b).

Hereinafter the invention will be further illustrated by the following non-limiting drawing. Herein shows:

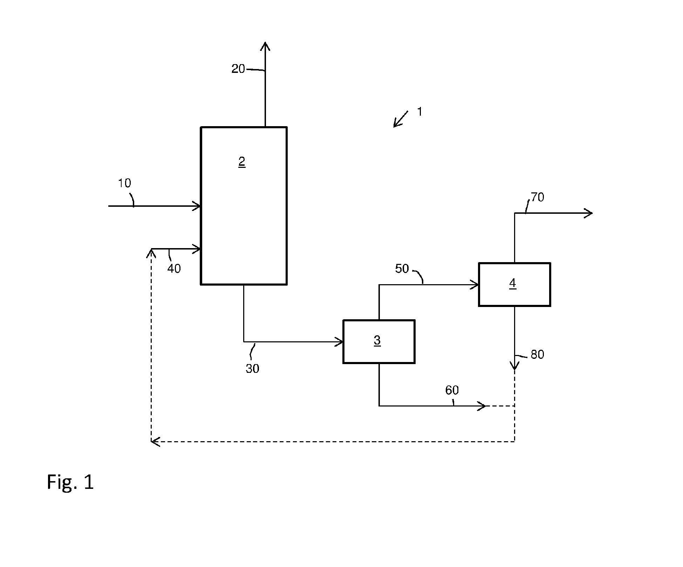

Fig. 1 schematically a process scheme of the method according to the present invention.

For the purpose of this description a single reference number will be assigned to a line as well as a stream carried in that line. Same reference numbers refer to same or similar elements.

In Figure 1 a process scheme is shown, generally referred to with reference number 1, comprising a first vessel 2, a second vessel 3 and a third vessel 4. In the process scheme 1, H₂S is removed from a contaminated CH₄ gas stream 10 (containing gaseous H₂S as contaminant).

The contaminated gas stream 10 is fed into the vessel 2. The vessel 2 contains an aqueous liquid (fed as stream 40), containing an aqueous solution of H₂S in water. The aqueous solution is saturated in H₂S, containing e.g. 0.5 wt.% solvated gaseous contaminant. The contaminated gas stream 10 is dispersed into the aqueous liquid, e.g. by providing gas bubbles of the contaminated gas in the aqueous liquid having a bubble size of less than 5 mm. These bubbles can be achieved by using e.g. high speed mixing. Hereby H₂S hydrates are formed in the vessel 2. In order to avoid the formation of CH₄ hydrates, the contact time in the vessel 2 is kept relatively short, preferably below 3 minutes.

Subsequently, a H₂S-depleted CH₄ rich gas stream 20 is removed from the vessel 2; stream 20 may be subjected to further steps and e.g. be liquefied to obtain LNG.

Typically at the bottom of the vessel 2 a stream 30 containing a slurry of hydrates in water is removed from the vessel 2. The slurry stream 30 is sent to and fed into the second vessel 3 (functioning as a solid/liquid separator) to separate the H₂S hydrates from the water. A concentrated H₂S hydrates stream is removed from the vessel 3 as stream 50. Also, a water-enriched stream 60 (still containing some dissolved H₂S) is removed from the vessel 3.

The concentrated H₂S hydrates stream 50 is sent to the vessel 4 to decompose the H₂S hydrates. As the person skilled in the art is familiar with how to decompose hydrates, this is not further explained here. From the vessel 4 a gaseous H₂S stream 70 is removed, as well as a liquid stream 80, stream 80 being an (preferably saturated) aqueous solution of H₂S. As suggested in the embodiment of Figure 1, at least a part of the stream 80 and/or stream 60 may be reused (after optionally combining if at least a part of both stream 60 and 80 is reused) as stream 40 in vessel 2.

Table 1 below shows typical conditions and compositions of some of the streams in the process scheme 1.

**Table 1**

| Stream | Pressure [bara] | Temperature [°C] | Composition |
|---|---|---|---|
| 10 | 40 | 15 | CH₄(g) + H₂S(g) |
| 20 | 40 | 15 | CH₄(g) |
| 30 | 40 | 15 | H₂O(l) + H₂S(aq) + H₂S(hydrate) |
| 40 | 35 | 15 | H₂O(l) + H₂S(aq) |
| 50 | | 15 | H₂S(hydrate) |
| 60 | 35 | 15 | H₂O(l) + H₂S(aq) |
| 70 | | 15 | H₂S(g) |
| 80 | | 15 | H₂S(l) + H₂S(aq) |

### EXAMPLES

The invention will be illustrated using the following, non-limiting, examples.

### Example 1

In an 308 ml Hatsalloy C autoclave (obtainable from Premex reactor A.G. (Langnau, Switzerland)) containing 27 g of distilled water saturated with H₂S (containing 0.5 wt.% solvated H₂S), a contaminated gas mixture consisting of 70 vol.% methane and 30 vol.% H₂S was added via a high speed gas injection stirrer (model BR2; obtainable from Premex reactor A.G.) rotating at >1000 rpm thereby providing gas bubbles of the contaminated gas in the distilled water saturated with H₂S having a bubble size of less than 5 mm. The applied inlet pressure to the autoclave was 31 bara and the temperature of the autoclave was 15°C. After three minutes, the formation of H₂S hydrate crystals was observed. The gas stream removed from the autoclave had an H₂S concentration of 22 vol.%.

### Example 2

The method of Example 1 was repeated, except that 27 g of brine (containing 3 wt.% NaCl) saturated with H₂S (again, containing 0.5 wt.% solvated H₂S) was used. Further, the applied inlet pressure to the autoclave was 27 bara and the temperature of the autoclave was 5°C.

Within 1 minute, the formation of H₂S hydrate crystals was observed. The gas stream removed from the autoclave had an H₂S concentration of 22 vol.%.

### Discussion

As can be seen from Examples 1 and 2, the H₂S levels in the contaminated gas stream were significantly reduced using the method according to the present invention.

## Claims

1. A method of removing a gaseous contaminant, preferably hydrogen sulphide (H₂S), from a contaminated gas stream, the method comprising at least the steps of:
(a) providing a contaminated gas stream containing a gaseous contaminant;
(b) mixing the contaminated gas stream with an aqueous liquid in a vessel thereby forming hydrates of the contaminant;
(c) removing a contaminant-depleted gas stream from the vessel;
(d) removing a stream containing hydrates as formed in step (b) from the vessel;
wherein the aqueous liquid before the mixing of the contaminated gas stream in step (b) contains at least 0.1 wt.% solvated gaseous contaminant.

2. A method according to claim 1, wherein the contaminated gas stream provided in step (a) contains at least 5 vol.%, preferably at least 10 vol.%, more preferably at least 15 vol.% H₂S as the gaseous contaminant.

3. A method according to claim 1 or 2, wherein before the mixing in step (b) the aqueous liquid contains at least 0.2 wt.%, preferably at least 0.3 wt.% solvated gaseous contaminant.

4. A method according to any one of claims 1-3, wherein in step (b) the contaminated gas stream is mixed with the aqueous liquid, by introducing the contaminated gas stream as gas bubbles.

5. A method according to claim 4, wherein during the introducing in step (b) the gas bubble surface to volume ratio is at least 1000, preferably at least 5000.

6. A method according to any one of claims 1-5, wherein during the mixing in step (b) the pressure in the vessel is from 5 to 50 bara, preferably from 10 to 40 bara, more preferably from 25 to 40 bara.

7. A method according to any one of claims 1-6, wherein during the mixing in step (b) the temperature in the vessel is from 1 to 30°C, preferably from 5 to 20°C, more preferably from 10 to 16°C.

8. A method according to any one of claims 1-7, wherein the stream containing hydrates as removed in step (d) is in the form of a slurry containing from 10 to 60 wt.% solids, preferably from 20 to 50 wt.% solids.

9. A method according to any one of claims 1-8, wherein the contaminated gas stream contains gaseous CH₄ and wherein the ratio of the partial pressure of the gaseous CH₄ before and after the hydrates formation in step (b) is below 0.10, preferably below 0.05.

10. A method according to any one of claims 1-9, wherein the contact time between the contaminated gas stream and the aqueous liquid in step (b) is below 10 minutes, preferably below 5 minutes.

11. A method according to any one of claims 1-10, wherein the hydrates in the stream containing hydrates as removed in step (d) are decomposed thereby obtaining a stream containing an aqueous solution of the gaseous contaminant.

12. A method according to claim 11, wherein the stream containing the aqueous solution of the gaseous contaminant is used as the aqueous liquid in step (b).
